(19) Europäisches Patentamt
European Patent Office
Office européen des brevets

(11) **EP 1 582 140 B1**

(12) **FASCICULE DE BREVET EUROPEEN**

(45) Date de publication et mention
de la délivrance du brevet:
**27.02.2008 Bulletin 2008/09**

(51) Int Cl.:
*A61B 1/05* *(2006.01)* *A61B 5/107* *(2006.01)*

(21) Numéro de dépôt: **05290690.6**

(22) Date de dépôt: **29.03.2005**

(54) **Dispositif de métrologie par pointage laser pour sonde vidéoendoscopique**

Metrologievorrichtung durch Laserziele für videoendoskopische Sonde

Device of metrology by laser pointing for videoendoscopic probe

(84) Etats contractants désignés:
**DE GB**

(30) Priorité: **02.04.2004 FR 0403512**

(43) Date de publication de la demande:
**05.10.2005 Bulletin 2005/40**

(73) Titulaire: **Tokendo**
**13600 La Ciotat (FR)**

(72) Inventeur: **Rovegno Jean**
**13600 La Ciotat (FR)**

(74) Mandataire: **Bentz, Jean-Paul et al**
**Novagraaf Technologies**
**Cabinet Ballot**
**122, rue Edouard Vaillant**
**92593 Levallois-Perret Cedex (FR)**

(56) Documents cités:
**WO-A-20/04000107** **DE-A- 3 629 435**
**FR-A- 2 630 538** **GB-A- 2 269 453**
**US-A- 4 281 931** **US-A- 4 660 982**
**US-A- 5 468 238** **US-A- 5 633 675**

**Description**

La présente invention concerne un dispositif permettant de mesurer les dimensions d'une cible située dans le champ d'observation d'une sonde vidéoendoscopique.

Elle s'applique notamment, mais non exclusivement à l'endoscopie à vocation industrielle.

On désigne par les termes endoscope ou fibroscope une sonde rigide ou souple, destinée à être introduite dans une cavité obscure et permettant à son utilisateur d'observer à travers un oculaire l'image d'une cible située dans la cavité. Une telle sonde intègre à cet effet un dispositif d'illumination de la cible et un dispositif optique fournissant à l'utilisateur une image de la cible. Le dispositif optique comprend un objectif distal, un dispositif de transport d'images de nature rigide constitué d'une série de lentilles, ou de nature souple constitué d'un faisceau de fibres optiques ordonnées, et un oculaire proximal dans lequel l'utilisateur peut observer l'image de la cible. Le dispositif d'illumination comprend généralement un faisceau de fibres d'éclairage dont l'extrémité distale, convenablement orientée à proximité de l'objectif distal, illumine la cible quand son extrémité proximale est connectée à un générateur de lumière.

On désigne par le terme vidéoendoscope une sonde souple ou rigide permettant à son utilisateur d'observer sur un écran vidéo l'image d'une cible située dans une cavité obscure. A cet effet, un vidéoendoscope comprend un dispositif d'illumination de la cible identique à celui d'un endoscope ou d'un fibroscope et un dispositif optoélectronique fournissant à l'utilisateur une image vidéo de la cible. Un vidéoendoscope peut soit résulter de la connexion de l'oculaire d'un endoscope ou d'un fibroscope sur l'objectif d'une caméra d'endoscopie, soit faire l'objet d'une architecture spécifique caractérisant une sonde vidéoendoscopique et comprenant :

- un embout distal logeant un dispositif optoélectronique comprenant notamment un capteur CCD sur la surface photosensible duquel se forme l'image délivrée par l'objectif auquel il est associé,
- un tube d'inspection, le plus souvent de nature souple, dont l'extrémité distale est solidaire de l'embout distal,
- une poignée de commande solidaire de l'extrémité proximale du tube d'inspection,
- un tube ombilical souple de raccordement dont l'extrémité distale est solidaire de la poignée de commande et dont l'extrémité proximale est destinée à être raccordée à un coffret externe intégrant notamment un générateur de lumière et une source d'alimentation électrique,
- un faisceau de fibres d'éclairage logé dans le tube ombilical, dans la poignée de commande, puis dans le tube d'inspection et dont l'extrémité distale, logée dans l'embout distal, illumine la cible lorsque son extrémité proximale est connectée à un générateur de lumière,
- un processeur vidéo transformant en un signal vidéo utile le signal électrique délivré par le capteur CCD distal auquel il est relié par un câble électrique multiconducteurs, et dont la synchronisation est réglée en fonction de la longueur du câble,
- un panneau de commande permettant de régler le fonctionnement du processeur vidéo en fonction notamment de la température de couleur de l'éclairement de la cible par l'extrémité distale du faisceau de fibres d'éclairage de la sonde vidéoendoscopique, et
- un moniteur vidéo relié au processeur vidéo et implanté, de préférence à proximité immédiate de la poignée de commande.

Les sondes vidéoendoscopiques peuvent disposer en outre des fonctions suivantes :

- un béquillage distal articulé permettant de modifier l'orientation de l'embout distal de la sonde, la poignée de commande intégrant alors des moyens de commande mécaniques ou électromécaniques permettant d'actionner ce béquillage,
- des têtes optiques interchangeables adaptables sur l'embout distal du tube d'inspection et permettant de modifier le champ optique couvert par le vidéoendoscope et/ou les directions des axes de visée optique et d'illumination du vidéoendoscope, et
- un dispositif numérique de gel, d'enregistrement, de pointage et de traitement d'images, ce dispositif pouvant être soit un simple ordinateur portable équipé d'une entrée vidéo, soit un système dédié géré par le panneau de commande du vidéoendoscope qui sera alors de préférence implanté sur la poignée de commande.

Dans le cadre de l'inspection de pièces mécaniques, il peut être souhaitable de compléter la fonction de visualisation d'une sonde vidéoendoscopique par une fonction de métrologie permettant à l'utilisateur de mesurer directement les dimensions de certains éléments d'une cible en cours d'inspection. L'intégration dans une sonde vidéoendoscopique d'une fonction métrologie suppose la mise en oeuvre d'une méthode de mesure et de dispositifs de mesure spécifiques à cette méthode.

Les dispositifs de mesure utilisés en vidéoendoscopie comprennent généralement les deux moyens suivants :

- un moyen optique intégré dans l'extrémité distale de la sonde vidéoendoscopique et permettant d'insérer dans l'image de la cible visualisée sur l'écran vidéo couplé à la sonde une image auxiliaire caractérisant la position réelle de la cible dans le champ optique couvert par la sonde, et
- un moyen numérique de traitement d'image permettant à l'utilisateur de pointer sur l'écran vidéo associé à la sonde les extrémités des images vidéo de la cible et de l'image auxiliaire, puis de mettre en oeuvre un algorithme de calcul permettant de déduire des pointages les dimensions réelles de la cible.

La mise en oeuvre dans une sonde vidéoendoscopique du moyen optique distal spécifique à la méthode de mesure retenue doit de préférence passer par l'intégration de ce moyen optique dans une tête distale de mesure amovible et interchangeable avec les têtes optiques traditionnelles de la sonde. Sachant que dans le cas d'une tête de mesure amovible les dispositifs mécaniques permettant de positionner et de verrouiller la tête sur l'extrémité distale de la sonde vidéoendoscopique doivent répondre à des critères de précision sévères, tout en satisfaisant aux exigences plus générales suivantes :

- mise en continuité des voies optiques et des voies d'illumination de la sonde vidéoendoscopique et de la tête amovible, fonction nécessitant la mise en oeuvre simultanée d'un verrouillage longitudinal et d'une indexation latérale,
- prévention de toute possibilité de déverrouillage accidentel de la tête amovible, et
- absence de pollution du capteur CCD par des rayons lumineux parasites émanant de la voie d'illumination de la sonde.

Les moyens mécaniques mis en oeuvre pour répondre à ces contraintes varient en fonction de la structure optique du couple sonde / tête amovible. Le plus souvent, comme c'est le cas dans le brevet US 4 727 859, le capteur CCD de la sonde est fixement associé à un dispositif optique distal présentant un encombrement frontal inférieur à celui du capteur CCD. Ce dispositif optique peut dans ces conditions être logé dans la partie distale de la sonde qui présente alors un diamètre inférieur à celui de la sonde elle-même, afin de pouvoir être coiffée par l'extrémité tubulaire proximale de têtes amovibles présentant un diamètre identique à celui de la sonde. Cette architecture présente l'avantage de simplifier les dispositifs de verrouillage et l'inconvénient de devoir loger dans les têtes amovibles un dispositif optique complémentaire à celui intégré à demeure dans la sonde. Dans un souci de réduction de la longueur globale du système optique, il s'avère techniquement plus avantageux de loger l'ensemble du système optique dans les têtes amovibles qui viennent alors se fixer directement sur le capteur CCD intégré à la sonde, sachant que les dispositifs mécaniques de verrouillage sont dans ces conditions plus délicats à réaliser.

Les méthode de mesure utilisées en vidéoendoscopie peuvent être regroupées en deux catégories, à savoir :

- les méthodes de mesure dites directes qui consistent à visualiser simultanément sur l'écran vidéo de la sonde vidéoendoscopique l'image de la cible de dimensions inconnues que l'on souhaite mesurer et l'image d'un étalon de dimensions connues associé à la cible, ces méthodes consistant dans ces conditions à pointer les extrémités de l'image de la cible et de l'image de l'étalon et à mettre en oeuvre un simple algorithme de comparaison permettant de déduire des pointages la dimension réelle de la cible, et

- les méthodes de mesure dites indirectes qui consistent à visualiser simultanément sur l'écran vidéo de la sonde vidéoendoscopique l'image de la cible de dimensions inconnues que l'on souhaite mesurer et l'image d'un élément auxiliaire associé à la cible et dont la position sur l'écran vidéo est le reflet d'un paramètre physique significatif de la mesure, tel que par exemple la distance d'observation séparant la cible de l'extrémité distale de la sonde vidéoendoscopique, ces méthodes consistant dans ces conditions à pointer l'image de l'élément auxiliaire et les extrémités de l'image de la cible et à mettre en oeuvre un algorithme permettant de déduire successivement des pointages la distance d'observation, les coordonnées réelles dans l'espace des extrémités de la cible, puis enfin les dimensions réelles de la cible.

Différentes méthodes de mesure utilisées en vidéoendoscopie sont brièvement décrites ci-après.

Mesure directe par comparaison de deux éléments de la cible

Cette méthode consiste à visualiser simultanément deux éléments de la cible situés à proximité l'un de l'autre, l'un de dimensions inconnues que l'on souhaite mesurer et l'autre de dimensions connues, puis de comparer directement les dimensions de l'image vidéo de l'élément inconnu aux dimensions de l'image vidéo de l'élément connu. Cette méthode, très simple à mettre en oeuvre, n'est pas de portée universelle dans la mesure où il s'avère peu fréquent de disposer d'une image endoscopique présentant un élément étalon de dimensions connues situé à proximité de la cible à mesurer.

Mesure directe par maillage de l'image de la cible

Cette méthode de modélisation, décrite dans le brevet JP 11045349, consiste à incruster par des moyens électroniques dans l'image vidéo délivrée par la sonde vidéoendoscopique un réseau maillé "trois dimensions" spécifique de la pièce à inspecter, puis à déduire les dimensions d'une cible située sur la pièce des dimensions de la maille dans laquelle l'image vidéo de cette cible est située.
Cette méthode, très lourde à mettre en oeuvre, ne présente un intérêt pratique que très limité.

Mesure directe par projection sur la cible d'un faisceau laser collimaté

Cette méthode, décrite dans le brevet GB 1 573 142, consiste à projeter dans le champ d'observation d'une caméra vidéo un faisceau laser collimaté cylindrique parallèle à l'axe optique de la caméra de façon à former à proximité de la cible un spot étalon circulaire et lumineux de dimensions connues et invariantes. La mesure des dimensions de la cible consiste alors à comparer directement sur l'écran vidéo associé à la caméra les dimensions inconnues de l'image de la cible aux dimensions connues de l'image du spot étalon lumineux. Cette méthode dont la mise en oeuvre dans un endoscope disposant d'une fibre laser intégrée a été décrite dans le brevet GB 2 269 453, s'avère parfaitement adaptable à la vidéoendoscopie. Malheureusement, les faibles dimensions d'un collimateur intégrable dans l'extrémité distale d'une sonde vidéoendoscopique de faible diamètre limitent de façon drastique le diamètre du faisceau laser collimaté. Cette limitation entraîne, à partir d'une distance d'observation relativement courte, la génération d'une image vidéo du spot laser présentant un diamètre tellement petit que toute mesure par comparaison devient très vite illusoire.
Une variante de cette méthode de mesure directe mettant en oeuvre un faisceau laser collimaté annulaire généré au niveau de l'extrémité distale d'une fibre laser intégrée dans un fibroscope à visée latérale a été décrite dans le brevet US 4 281 931.
Une autre variante de cette même méthode a été utilisée dans un fibroscope décrit dans le brevet DE 36 29 435 grâce à deux fibres laser intégrées dans le fibroscope et projetant dans le champ de vision deux rayons laser parallèles à l'axe de visée de façon à former à proximité d'une cible située dans le champ de vision deux points lumineux présentant un écart de dimension connue et invariante. La mesure des dimensions de la cible consiste alors à comparer directement sur l'écran vidéo associé à une caméra connectée sur la bonnette du fibroscope les dimensions inconnues de l'image de la cible à la dimension connue de l'écart séparant les images des deux points lumineux.
Les endoscopes relevant de l'état de l'art actuel en la matière et mettant en oeuvre la méthode de mesure directe évoquée ci-dessus présentent les limitations suivantes :

- transmission par une fibre optique du faisceau laser émis par une source laser proximale, nécessitant un dispositif optique proximal d'adaptation introduisant des pertes, et un dispositif optique distal de collimation du faisceau lumineux dont les performances sont limitées par la taille de l'embout distal de l'endoscope, et
- impossibilité d'adaptation aux conditions d'observation du champ optique observé et de la forme du faisceau laser projeté.

Mesure indirecte par projection sur la cible d'un rayon laser

Cette méthode qui est décrite dans le brevet FR 2 630 538, consiste à projeter dans le champ d'observation d'une caméra vidéo un rayon laser présentant un axe parallèle à l'axe optique de la caméra et généré à une distance connue de l'axe optique, de façon à former un point lumineux à proximité de la cible. La mesure des coordonnées réelles des extrémités de la cible étant déduite du pointage sur l'écran vidéo associé à la caméra de l'image du point laser et des extrémités de l'image de la cible. Ce brevet mentionne par ailleurs de façon explicite la mise en oeuvre de cette méthode en endoscopie.
Les imprécisions de pointage du centre de l'image vidéo du point laser dues à l'absence de tout dispositif de collimation associé à l'extrémité distale de la fibre laser intégrée dans une sonde rendent la mise en oeuvre de cette méthode en vidéoendoscopie plus délicate que celle de la méthode de mesure directe décrite dans le paragraphe précédent. Néanmoins, cette méthode de mesure indirecte reste très utilisée pour réaliser naturellement des mesures de distance d'observation permettant de positionner quasi automatiquement l'extrémité distale d'un endoscope à une distance prédéterminée d'une cible.
Une variante de cette méthode a ainsi été mise en oeuvre dans un fibroscope décrit dans le brevet DE 36 29 435 grâce à une fibre laser intégrée dans le fibroscope et projetant dans le champ de vision un rayon laser incliné sur l'axe de visée du fibroscope de façon à former sur la cible un point lumineux générant une image dont l'écart par rapport au centre du champ image est fonction de la distance d'observation.
Une variante similaire de cette méthode a également été mise en oeuvre dans un endoscope décrit dans le brevet FR 2 480 107, grâce à une fibre laser intégrée dans le fibroscope et projetant dans le champ de vision un rayon laser incliné sur l'axe de visée de l'endoscope de façon à former sur la cible un point lumineux générant une image dont la coïncidence avec le centre du champ image caractérise la distance de pointage.

Les endoscopes relevant de l'état de l'art actuel en la matière et mettant en oeuvre la méthode de mesure indirecte évoquée ci-dessus présentent les caractéristiques limitatives suivantes :

- transmission par une fibre optique du faisceau laser émis par une source laser proximale, nécessitant un dispositif optique proximal d'adaptation introduisant des pertes, et
- impossibilité d'adaptation aux conditions d'observation du champ optique observé et de la forme du faisceau laser projeté.

Mesure indirecte par projection sur la cible d'une image auxiliaire

Cette méthode qui est décrite dans les brevets DE 28 47 561 et US 4 660 982 consiste à projeter sur la cible visée par un endoscope une image auxiliaire générée par un masque associé à un objectif intégré dans l'extrémité distale du dispositif d'illumination de l'endoscope. La distance d'observation et les dimensions de la cible peuvent alors être déduites du positionnement et des dimensions dans le champ image de l'oculaire de l'endoscope, d'une part de l'image de la cible et d'autre part de l'image de l'image auxiliaire projetée sur la cible.

Bien que très utilisée en vidéoendoscopie selon des modalités de mise en oeuvre décrites dans les brevets US 4 980 763 et US 5 663 675, cette méthode présente de sérieuses limitations de la profondeur du champ de mesure, limitations dues au fait que l'image auxiliaire projetée sur la cible n'est nette qu'à une distance d'observation donnée. Au delà et en deçà de cette distance d'observation, l'image vidéo de cette image auxiliaire présente un flou plus ou moins prononcé qui rend aléatoires le pointage de cette image vidéo et donc la précision des mesures qui en découlent.

Mesure indirecte par dédoublement d'image

Cette méthode consiste à former sur la surface sensible du capteur CCD distal d'une sonde vidéoendoscopique deux images de la cible vue sous des angles différents grâce à deux voies optiques distales distinctes. La distance d'observation et les dimensions de la cible peuvent alors être déduites à l'aide d'outils électroniques de pointage et de calcul des positions relatives et des dimensions sur l'écran vidéo de la sonde de ces deux images.

Ces deux images peuvent être simultanément générées par deux objectifs distincts disposés dans l'extrémité distale de la sonde (US 4 873 572, US 2002/0137986, US 6 063 023), ou de façon séquentielle grâce à la mise en oeuvre alternée de deux pupilles intégrées dans l'objectif distal de la sonde et disposées symétriquement par rapport à l'axe optique (US 5 222 477). Les deux méthodes évoquées ci-dessus présentent de sévères difficultés d'intégration des moyens optiques nécessaires à leur mise en oeuvre dans l'extrémité distale d'une sonde vidéoendoscopique de faible diamètre.

Déjà évoquée dans les brevets DE 34 32 583 et DE 41 02 614, une variante de cette méthode mieux adaptée à la vidéoendoscopie a été décrite dans le brevet US 6 411 327. Cette variante consiste à placer devant l'extrémité distale de l'objectif d'une caméra vidéo un dispositif de dédoublement d'image constitué d'un simple composant optique unitaire présentant une face distale plane et une face proximale en forme de delta à arête saillante. Les limitations, tant en largeur qu'en profondeur, du champ optique de mesure spécifique de ce type de dispositif réduisent malheureusement le domaine d'application de cette méthode séduisante.

La présente invention a pour but de supprimer ces inconvénients et de proposer une solution de métrologie qui soit performante même pour un embout une sonde vidéoendoscopique de petit diamètre, de l'ordre de 6 mm. Cet objectif est atteint par la prévision d'un vidéoendoscope selon la revendication 1 comprenant un embout distal, une source laser générant un faisceau laser et un dispositif optique de mise en forme agencé pour produire à partir du faisceau laser une tâche lumineuse calibrée à proximité d'une cible dont on souhaite mesurer les dimensions.

Selon l'invention, la source laser est logée dans l'embout distal et le dispositif optique de mise en forme est logé au moins partiellement dans une tête optique amovible adaptable sur l'embout distal.

Avantageusement, la source laser logée dans l'embout distal est constituée par l'extrémité distale d'une fibre optique dont l'extrémité proximale est reliée à une diode laser.

Alternativement, la source laser logée dans l'embout distal est constituée par une diode laser.

De préférence, l'embout distal loge un capteur vidéo d'un dispositif d'imagerie vidéo du vidéoendoscope, la diode laser étant alimentée en mode pulsé asservi à un signal vidéo produit par le dispositif d'imagerie vidéo pour couper l'alimentation de la diode laser en dehors de périodes de balayage ligne du signal vidéo.

Selon un mode de réalisation de l'invention, le dispositif optique de mise en forme comprend un collimateur optique couplé à la diode laser dans l'embout distal.

Selon un mode de réalisation de l'invention, le dispositif optique de mise en forme produit un faisceau lumineux parallèle à un axe optique d'observation du vidéoendoscope.

**EP 1 582 140 B1**

Selon un mode de réalisation de l'invention, le dispositif optique de mise en forme produit un faisceau lumineux assimilable à un rayon lumineux produisant un point à proximité de la cible.

Selon une première variante de l'invention, le dispositif optique de mise en forme produit un faisceau lumineux de section droite circulaire de diamètre constant.

Selon une seconde variante de l'invention, le dispositif optique de mise en forme produit un faisceau lumineux divergent et de section droite circulaire.

Selon un mode de réalisation de l'invention, le vidéoendoscope comprend des moyens pour déterminer une taille réelle de la tâche lumineuse calibrée en fonction de la taille de la tâche observée par le vidéoendoscope, de la distance entre un axe optique d'observation du vidéoendoscope et l'axe du faisceau lumineux, et de la distance entre le centre d'une image vidéo produite par le vidéoendoscope et le centre de la tâche lumineuse calibrée, et des moyens pour déduire les dimensions de la cible observée à partir de la taille réelle de la tâche lumineuse.

Selon un mode de réalisation de l'invention, la tête optique amovible comprend en outre des moyens de réflexion, pour introduire une déviation du faisceau laser et de l'axe optique d'observation du vidéoendoscope.

L'invention concerne également une tête optique selon la revendication 12 comprenant un objectif distal de caméra conçu pour coopérer avec un dispositif d'imagerie vidéo logé dans l'embout distal d'une sonde vidéoendoscopique.

La tête optique comprend un faisceau de fibres d'éclairage dont l'extrémité distale est destinée à éclairer la cible et dont l'extrémité proximale est destinée à être couplée à l'extrémité distale d'un faisceau de fibres d'éclairage équipant la sonde vidéoendoscopique, les moyens d'accouplement assurant un alignement correct du faisceau de fibres d'éclairage avec le faisceau de fibres d'éclairage de la sonde vidéoendoscopique.

Selon l'invention, la tête optique est caractérisée en ce qu'elle comprend des moyens de fixation pour se fixer de manière amovible sur l'embout distal d'une sonde vidéoendoscopique, et un dispositif optique de mise en forme agencé pour recevoir un faisceau laser de la sonde vidéoendoscopique et le mettre en forme pour obtenir une tâche lumineuse calibrée à proximité d'une cible dont on souhaite mesurer les dimensions.

Selon un mode de réalisation de l'invention, la tête optique comprend en outre des moyens de réflexion, pour introduire une déviation de l'angle de visée de l'objectif distal de caméra et du faisceau laser projeté à proximité de la cible.

Avantageusement, les moyens de fixation sont du type doigt destiné à coopérer avec une fente en forme de baïonnette prévue sur l'embout distal de la sonde vidéoendoscopique et comprennent des moyens d'accouplement pour assurer un alignement correct, d'une part, de l'axe optique de objectif distal de caméra avec le dispositif d'imagerie vidéo de la sonde vidéoendoscopique, et d'autre part, de l'axe du faisceau laser émis par la sonde vidéoendoscopique avec l'axe optique du dispositif optique de mise en forme.

Selon un mode de réalisation de l'invention, les moyens de fixation sont formés sur un tube de verrouillage mobile axialement sur la tête optique entre des positions distale et proximale, et ramené vers la position distale par des moyens de rappel élastiques, les moyens d'accouplement étant de type mâle-femelle et étant disposés de manière à arriver en position accouplée en fin de course de verrouillage des moyens de fixation, sous l'effet des moyens de rappel élastiques.

Selon un mode de réalisation de l'invention, le dispositif optique de mise en forme produit un faisceau lumineux parallèle à un axe optique d'observation du vidéoendoscope.

Selon un mode de réalisation de l'invention, le dispositif optique de mise en forme produit un faisceau lumineux assimilable à un rayon lumineux produisant un point à proximité de la cible.

Selon une variante de l'invention, le dispositif optique de mise en forme produit un faisceau lumineux de section droite circulaire de diamètre constant.

Selon une autre variante de l'invention, le dispositif optique de mise en forme produit un faisceau lumineux divergent et de section droite circulaire.

Un mode de réalisation préféré de l'invention sera décrit ci-après, à titre d'exemple non limitatif, avec référence aux dessins annexés dans lesquels :

La figure 1 représente une vue frontale de la face distale de l'embout distal de la sonde vidéoendoscopique selon la présente invention ;

Les figures 2 et 3 représentent respectivement des vues en coupe transversale dans des plans perpendiculaires X et Y l'embout distal montré sur la figure 1 ;

Les figures 4 et 5 représentent respectivement des vues en coupe transversale dans les plans longitudinaux X et Y d'une tête distale de mesure amovible à visée axiale susceptible d'être connectée sur l'embout distal montré sur les figures 1 à 3 ;

La figure 6 représente une vue frontale de la face distale de la tête distale de mesure amovible montrée sur les figures 4 et 5 ;

La figure 7 représente une vue en coupe transversale dans le plan longitudinal Y d'une tête distale de mesure amovible à visée latérale susceptible d'être connectée sur l'embout distal montré sur les figures 1 à 3 ;

La figure 8 représente en perspective l'embout distal montré sur les figures 1 à 3, et la tête de mesure amovible montrée sur les figures 4 à 6 ou 7 ;

La figure 9 représente schématiquement en perspective une sonde vidéoendoscopique comprenant l'embout distal montré sur les figures 1 à 3 et équipée d'une tête de mesure amovible montrée sur les figures 4 à 6 ou 7 ;

La figure 10 montre schématiquement en perspective une variante de la sonde vidéoendoscopique représentée sur la figure 9 ;

Les figures 11, 12 et 13 illustrent la mise en oeuvre de trois types de dispositifs optiques de mise en forme d'un faisceau laser, intégrables dans la tête de mesure amovible montrée sur les figures 4 à 7, ainsi que des méthodes de mesure qui en découlent ;

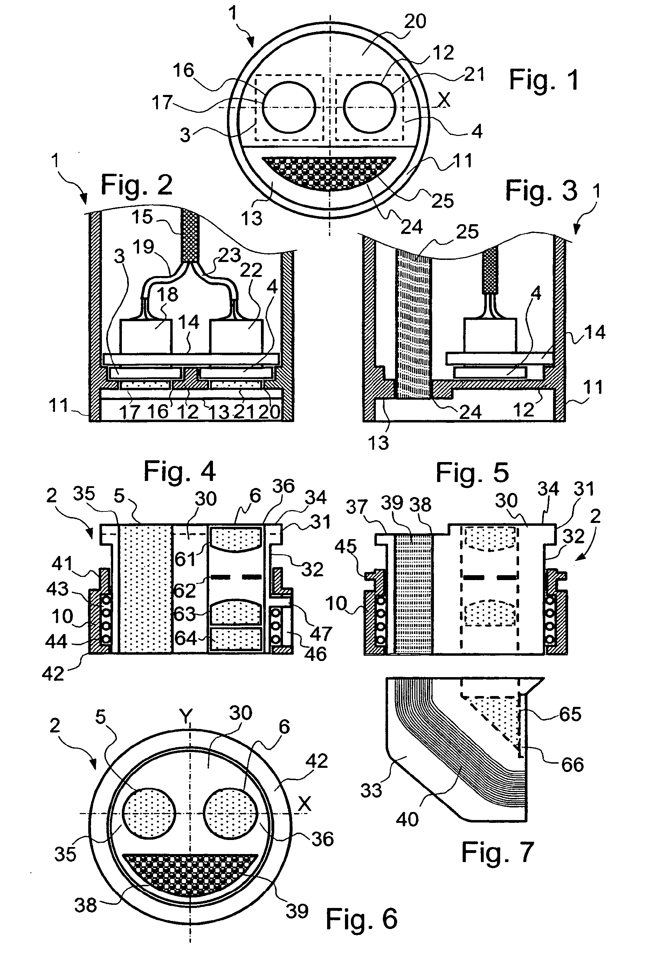

Les figures 1 à 3 illustrent schématiquement la structure d'un embout distal 1 de sonde vidéoendoscopique faisant l'objet de la présente invention, susceptible de recevoir des têtes distales de mesure amovibles décrites ci-après en référence aux figures 4 à 7.

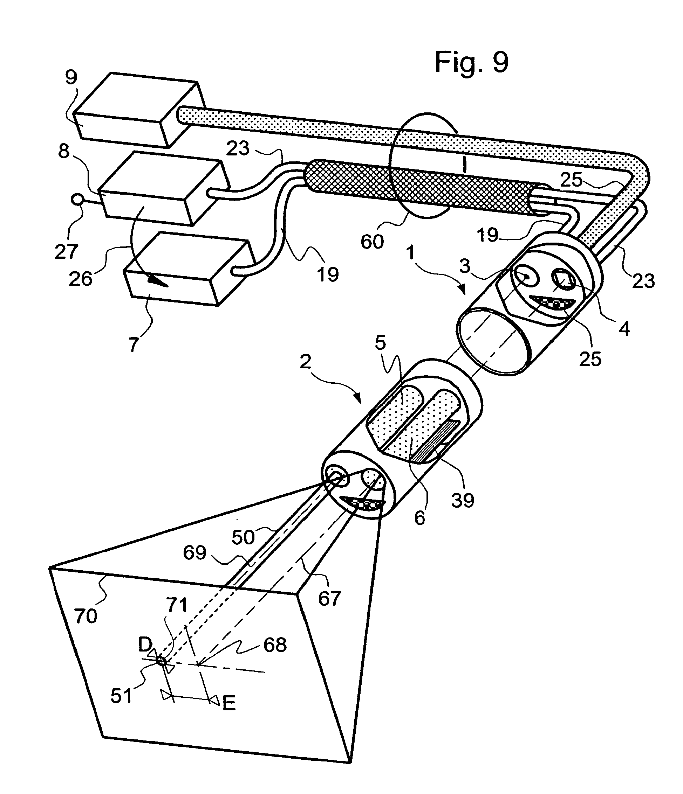

Sur les figures 1 à 3, l'embout distal 1 est comprend un tube cylindrique 11 comportant une cloison transversale interne 12 dont la face proximale sert de support à un circuit imprimé 14 sur la face distale duquel sont implantés un microcircuit 4 supportant un capteur CCD et un microcircuit 3 supportant une diode laser disposée de façon préférentielle sur l'axe de symétrie horizontal X du capteur CCD. La face proximale du circuit imprimé 14 sert de support à un circuit d'interface 18 de la diode laser 3 et un circuit d'interface 22 du capteur CCD 4. Des câbles multiconducteurs 19 et 23 logés dans une gaine 15, relient le circuit d'interface 18 de la diode laser 3 à un circuit proximal de commande de la diode, et le circuit d'interface 22 du capteur CCD 4 à un processeur vidéo proximal suivant des modalités décrites ci-après en référence à la figure 9.

La cloison transversale 12 présente deux orifices circulaires 16 et 20 disposés de préférence de manière à être symétriquement centrés sur l'axe horizontal X du capteur CCD 4. L'orifice 16 qui loge une glace de protection 17, est centré sur la diode laser 3, tandis que l'orifice 20 qui loge une glace de protection 24, est centré sur le capteur CCD 4. La cloison transversale 14 comprend en outre une saillie distale mâle excentrée 13 présentant par exemple un profil en forme d'arc de cercle avec une partie rectiligne parallèle à l'axe de symétrie horizontal X du capteur CCD 4 et une partie courbe confondue avec la face cylindrique interne du tube 11. La saillie distale mâle comporte un orifice oblong 24 logeant l'extrémité distale d'un faisceau de fibres d'éclairage 25 de la sonde vidéoendoscopique.

Les figures 4 à 6 illustrent schématiquement la structure d'une tête distale de mesure amovible à visée axiale 2 susceptible d'être connectée sur l'embout distal 1 décrit ci-avant en référence aux figures 1 à 3. Sur ces figures, la structure mécanique des têtes de mesure 2 résulte de l'association d'un noyau central 30 et d'un dispositif annulaire de verrouillage 10. La partie proximale cylindrique 31 du noyau 30, destinée à être logée dans l'extrémité distale du tube 11 de l'embout 1 dispose d'un renfoncement femelle 37 destiné à servir de logement lors du verrouillage à la saillie distale mâle 13 située sur la cloison transversale 12 de l'embout distal 1. La partie distale cylindrique 32 du noyau 30, qui présente un diamètre inférieur à celui de la partie proximale 31 du noyau, dispose d'un doigt radial externe 46 destiné à guider longitudinalement le dispositif de verrouillage 10 ceinturant la partie distale 32 du noyau.

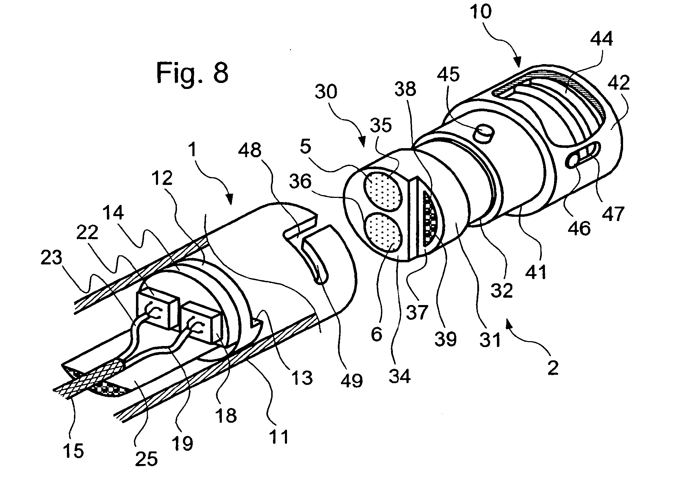

Le dispositif annulaire de verrouillage 10 qui ceinture la partie distale 32 du noyau 30 présente une partie cylindrique proximale 41 d'un diamètre externe compatible avec le diamètre interne du tube 11 de l'embout 1, et une partie cylindrique distale 42 d'un diamètre externe identique à celui de l'embout distal 1. La partie proximale 41 du dispositif de verrouillage 10 dispose de deux doigts radiaux externes 45 diamétralement opposés destinés à circuler, selon des modalités qui seront décrites ci-après en référence à la figure 8, dans deux fentes diamétralement opposées en forme de baïonnette ménagées dans la partie distale du tube 11 de l'embout 1. La partie distale 42 du dispositif de verrouillage 10 dispose d'une fente longitudinale fermée 47 dans laquelle circule le doigt radial 46 équipant la partie distale 32 du noyau central 30. Cette partie distale 42 dispose également d'un logement annulaire interne 43 contenant un ressort hélicoïdal 44 venant en appui sur le doigt radial 46 de façon à exercer une pression longitudinale tendant à ramener le doigt vers l'extrémité proximale de la fente longitudinale 47.

Le noyau central 30 de la tête distale de mesure à visée axiale 2 dispose de trois orifices longitudinaux 35, 36, 38. L'orifice cylindrique 35, dont l'extrémité proximale vient lors du verrouillage dans le prolongement de l'orifice circulaire 16 ménagé dans la cloison transversale 12 de l'embout 1 dans l'axe de la diode laser 3, loge un dispositif optique 5 de mise en forme du faisceau lumineux émis par la diode laser. L'orifice cylindrique 36, dont l'extrémité proximale vient lors du verrouillage dans le prolongement de l'orifice circulaire 20 ménagé dans la cloison transversale 12 de l'embout 1 dans l'axe du capteur CCD 4, loge un objectif formant l'image de la cible sur la surface photosensible du capteur CCD. L'objectif peut par exemple être constitué de deux lentilles convergentes 61, 63 et d'un diaphragme d'ouverture 62. L'orifice oblong 38, dont l'extrémité proximale ménagée dans le renfoncement femelle 37 vient lors du verrouillage dans le prolongement de l'orifice oblong 24 ménagé dans la saillie mâle 13 de la cloison transversale 12 de l'embout 1, et sert de logement à un faisceau de fibres d'éclairage 39.

Sur la figure 7, la structure d'une tête de mesure amovible à visée latérale découle de celle de la tête de mesure amovible à visée axiale 2 précédemment décrite en référence aux figures 4 à 6, par l'adjonction sur le noyau central 30 de ces têtes d'une extension distale 33 illustrée dans la figure 7 et logeant les moyens suivants :

- un prisme déviateur distal venant dans le prolongement de l'objectif 6 logé dans l'orifice cylindrique longitudinal 36 ménagé dans le noyau central 30,
- un prisme déviateur distal venant dans le prolongement du dispositif optique 5 de mise en forme du faisceau laser logé dans l'orifice cylindrique longitudinal 35 ménagé dans le noyau central 30, et
- une extension distale coudée 40 du faisceau de fibres d'éclairage 39 logé dans l'orifice longitudinal oblong 38 ménagé dans le noyau central 30.

La figure 8 illustre schématiquement les modalités de verrouillage de la tête de mesure amovible 2 sur l'embout distal 1, ce verrouillage étant effectué selon les trois phases successives suivantes.

Durant une phase d'introduction, illustrée par la figure 8, la partie cylindrique proximale 31 du noyau central 30 de la tête amovible 2 est introduite dans l'extrémité distale du tube 11 de l'embout distal 1, et ce jusqu'à ce que les deux doigts radiaux 45 solidaires de la partie proximale 41 du dispositif annulaire de verrouillage 10 se trouvent engagés dans les extrémités distales des fentes longitudinales ouvertes 48 ménagées dans l'extrémité distale du tube 11.

Au terme d'une phase suivante de compression, durant laquelle l'utilisateur a enfoncé au maximum la partie proximale 31 du noyau central 30 de la tête amovible 2 dans l'extrémité distale du tube 11 de l'embout distal 1, les positions respectives des divers éléments de l'embout et de la tête obéissent à la configuration décrite ci-après.

La face proximale 34 du noyau central 30 de la tête amovible 2 vient en appui sur la face distale de la saillie mâle 13 de la cloison transversale 12 de l'embout distal 1.

La face proximale de la partie proximale 41 du dispositif annulaire de verrouillage 10 vient en appui sur la face distale de la partie proximale 31 du noyau central 30.

Les deux doigts radiaux 45 viennent en appui sur les extrémités proximales des fentes longitudinales 48. Le doigt radial 46 solidaire de la partie distale 32 du noyau central 30 vient en appui sur l'extrémité distale de la fente longitudinale fermée 47 ménagée dans la partie distale 42 du dispositif annulaire de verrouillage 10. Le ressort hélicoïdal 44 logé dans la partie distale 42 du dispositif annulaire de verrouillage 10 est comprimé au maximum.

Au terme d'une phase suivante de verrouillage, durant laquelle l'utilisateur a fait tourner l'extrémité proximale de la tête 2 à l'intérieur de l'extrémité distale de l'embout 1 dans le sens inverse des aiguilles d'une montre, les positions respectives des divers éléments de l'embout et de la tête se trouvent dans la configuration suivante.

La face proximale 34 du noyau central 30 de la tête 2 vient en appui sur la face distale de la cloison transversale 12 de l'embout 1. La saillie mâle 13 de la cloison transversale vient se loger à l'intérieur du renfoncement femelle 37 ménagé dans l'extrémité proximale de la partie proximale 31 du noyau central 30 de la tête 2.

Les deux doigts radiaux 45 viennent en appui sur les extrémités fermées des fentes transversales 49.

Le ressort hélicoïdal 44 se trouve légèrement détendu par rapport à la phase précédente de telle façon que le doigt 46 soit positionné dans la partie médiane de la fente 47.

Le principe de verrouillage décrit ci-dessus présente un haut niveau de sécurité et interdit toute possibilité de déverrouillage accidentel. Le déverrouillage de la tête amovible exige en effet que l'utilisateur repousse à l'aide d'un outil pointu le doigt 46 vers l'extrémité distale de la fente 47 avant de faire subir à la tête une rotation dans le sens des aiguilles d'une montre afin de dégager les doigts 45 des fentes 48, 49 en forme de baïonnette ménagées dans l'extrémité distale du tube 11 de l'embout 1.

La figure 9 représente schématiquement un vidéoendoscope résultant de l'association d'une sonde vidéoendoscopique 60 selon la présente invention, dont l'extrémité proximale est connectée à des dispositifs d'exploitation 7, 8, 9 et dont l'extrémité distale est constituée d'un embout 1 pouvant recevoir des têtes amovibles 2.

L'embout distal 1 loge une diode laser 3 connectée à un dispositif d'alimentation 7 par un câble multiconducteurs 19, un capteur CCD 4 connecté à un processeur vidéo 8 par un câble multiconducteurs 23, et l'extrémité distale d'un faisceau de fibres d'éclairage 25 dont l'extrémité proximale est connectée à un générateur de lumière 9. De façon préférentielle, la diode laser 3 est une diode de faibles dimensions d'une puissance réduite (5mw par exemple) émettant dans les fréquences basses du spectre visible (655 nm par exemple).

Afin d'éviter un échauffement préjudiciable de l'embout distal et en particulier du capteur CCD, la diode est avantageusement alimentée en mode pulsé asservi au balayage vidéo, le processeur vidéo 8 transmettant à cet effet au dispositif d'alimentation 7 de la diode laser un signal de commande 26 interdisant au dispositif d'alimentation 7 d'alimenter la diode laser en dehors des périodes de balayage ligne.

La tête amovible 2 loge un dispositif optique 5 de mise en forme du faisceau laser émis par la diode laser 3, un objectif 6 permettant de former une image de la cible 71 sur la surface photosensible du capteur CCD 4, et un faisceau de fibres d'éclairage 39 transmettant la lumière transmise par le faisceau de fibres 25 pour ainsi illuminer la cible 71.

Le dispositif optoélectronique associant le capteur CCD 4 logé dans l'embout 1 et l'objectif 6 logé dans la tête 2 offre un champ d'observation de section rectangulaire centré sur l'axe optique 67 de l'objectif 6, ce dispositif optoélectronique permettant de visualiser sur un moniteur vidéo recevant le signal vidéo 27 délivré par le processeur vidéo 8, les images de cibles situées dans un plan objet rectangulaire 71 inscrit dans le champ d'observation et perpendiculaire à l'axe optique 67. Le dispositif optoélectronique associant la diode laser 3 logée dans l'embout 1 et le dispositif optique 5 de mise en forme du faisceau laser logé dans la tête 2 projette dans le champ d'observation un faisceau laser 50 centré sur un axe 69 de préférence orienté parallèlement à l'axe optique 67 et positionné dans le plan de symétrie horizontal du champ optique. Dans ces conditions, le faisceau laser 50 génère dans le plan objet rectangulaire 70 une tâche lumineuse circulaire étalon 51 présentant un diamètre D et dont le centre 71 est situé sur l'axe de symétrie horizontal du plan objet 71 à une distance E du centre 68 du plan objet. Suivant le type de méthode de mesure mis en oeuvre, le paramètre étalon de la mesure sera soit le diamètre D dans le cas d'une méthode de mesure directe par comparaison, soit la distance E dans le cas d'une méthode de mesure indirecte.

Si la cible dont on souhaite mesurer la longueur réelle AB est située dans le plan objet 71 perpendiculaire à l'axe optique 67, l'image vidéo du champ objet permet de visualiser l'image ab de la cible AB et l'image de la tâche circulaire 51, image ayant la forme d'un cercle de diamètre d et dont le centre est situé dans le plan de symétrie horizontal de l'image vidéo à une distance e du centre de l'image.

Si le diamètre de l'image vidéo de la tâche circulaire 51 présente une valeur suffisante pour être exploitable, l'opérateur peut utiliser une méthode de mesure directe de la longueur de la cible AB, cette mesure nécessitant la connaissance préalable du diamètre D supposé constant du faisceau laser collimaté 50 et l'exécution des opérations successives suivantes :

- pointage des extrémités a et b de l'image de la cible AB,
- pointage des extrémités d'un diamètre d de l'image de la tâche étalon 51,
- calcul des longueurs ab et d,
- détermination de la longueur AB par application de la formule suivante :

$$AB = ab \times \frac{D}{d} \qquad\qquad (1)$$

Quel que soit le diamètre de l'image vidéo de la tâche 51, et même si cette image est réduite à un point, l'opérateur peut également utiliser une méthode de mesure indirecte. Cette méthode nécessite la connaissance préalable de l'écart E supposé constant séparant l'axe optique 67 de l'axe 69 du faisceau laser et l'exécution des opérations successives suivantes :

- pointage des extrémités a et b de l'image de la cible AB,
- pointage du centre de l'image de la tâche 51 et du centre de l'image vidéo,
- calcul des longueurs ab et e,
- détermination de la longueur AB par application de la formule suivante :

$$AB = ab \times \frac{E}{e} \qquad\qquad (2)$$

L'utilisation des méthodes de mesure évoquées ci-dessus nécessite en outre le respect des précautions pratiques suivantes. Il est en effet nécessaire d'utiliser préalablement le béquillage de la sonde vidéoendoscopique afin de rapprocher l'image de la cible de l'image de la tâche laser sur le moniteur vidéo, puis de geler l'image vidéo avant d'entamer la procédure de mesure. Il faut en outre intégrer dans la procédure de mesure les paramètres de correction fournis par une table de correction, afin de corriger automatiquement les déformations optiques introduites par l'objectif de la sonde.

D'une façon plus générale, la mise en oeuvre d'une méthode endoscopique de mesure par projection d'un faisceau laser à proximité de la cible appelle les commentaires suivants.

Les faibles dimensions frontales d'une sonde vidéoendoscopique limitent aussi bien le diamètre du collimateur laser intégrable dans une telle sonde que l'écart séparant l'axe du faisceau laser de l'axe optique de l'objectif de la sonde. Dans ces conditions, les courbes de variation en fonction de la distance d'observation tant du diamètre d de l'image vidéo d'une tâche laser que de l'écart e séparant le centre de l'image du centre de l'écran vidéo tendent rapidement, de façon asymptotique, vers une valeur nulle, ce qui rend illusoire toute mesure, tant directe qu'indirecte, au-delà d'une certaine distance d'observation. Bien qu'un grossissement électronique de l'image vidéo et/ou le choix d'un objectif de visualisation de plus longue focale permettent de reculer cette distance limite d'utilisation, il est prudent de prévoir dans le programme de mesure une alarme permettant d'alerter l'utilisateur en cas de dépassement d'une distance d'observation au-delà de laquelle la dégradation de la précision de mesure devient inacceptable.

Les méthodes de mesure par comparaison directe des dimensions de l'image vidéo d'une cible et de l'image vidéo d'une tâche laser circulaire étalon présentent l'avantage de pouvoir utiliser visuellement l'image de la tâche comme un "calibre" permettant d'estimer intuitivement la gravité des défauts visualisés. De plus, l'analyse par des moyens informatiques des caractéristiques géométriques de l'image vidéo d'une tâche laser de forme elliptique résultant de la projection d'un faisceau laser collimaté cylindrique sur un plan objet incliné sur l'axe optique de la sonde permet de mesurer les dimensions de défauts situés dans un plan non perpendiculaire à l'axe optique. Ce type de mesure est impossible à réaliser dans le cadre d'une méthode indirecte mettant en oeuvre la visualisation d'un simple point laser.

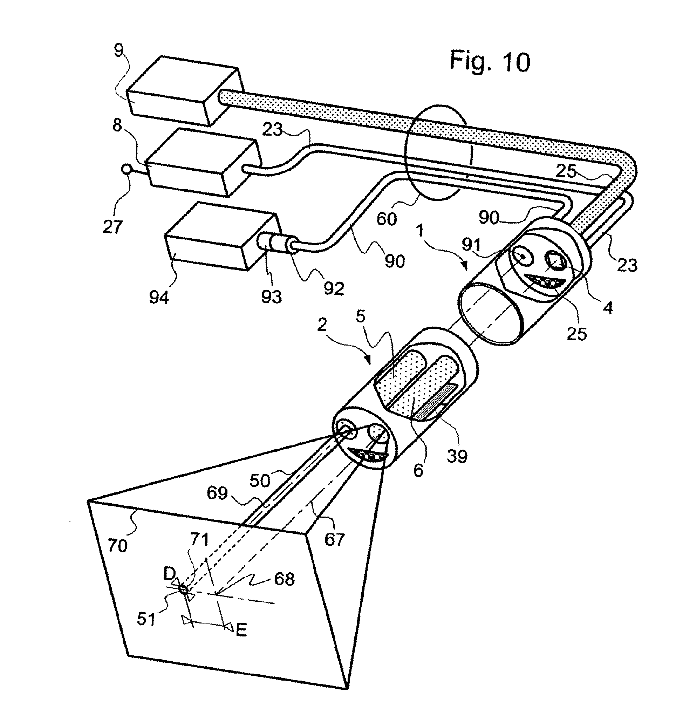

La figure 10 montre une variante du vidéoendoscope montré sur la figure 9. Sur cette figure, l'embout distal 1 de la sonde vidéoendoscopique loge l'extrémité distale 91 d'une fibre laser 90 reliée à une diode laser 93 par l'intermédiaire d'un dispositif optique d'adaptation 92, la diode laser étant connectée à un boîtier d'alimentation 94. Comme décrit précédemment en référence à la figure 9, la tête amovible loge un dispositif optique 5 de mise en forme du faisceau laser.

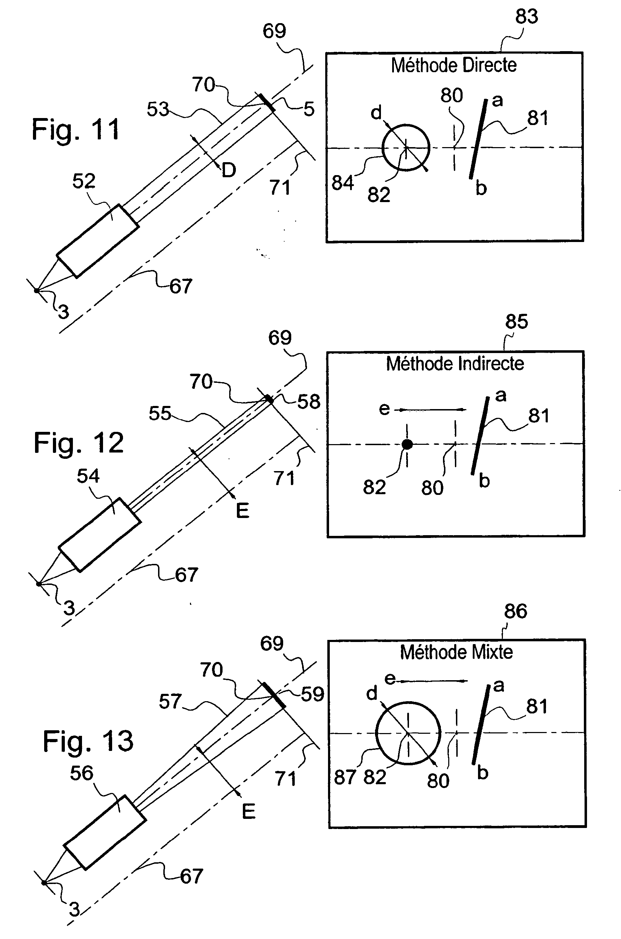

Les figures 11, 12, 13 illustrent la mise en oeuvre de trois types de dispositifs optiques 52, 54, 56 de mise en forme d'un faisceau laser, intégrables dans une tête de mesure amovible 2, ainsi que les méthodes de mesure qui en découlent.

Les dispositifs optiques ont pour fonction de transformer le faisceau de lumière divergent émis par la diode laser 3 intégrée dans l'embout distal de la sonde vidéoendoscopique en un faisceau calibré présentant un axe de symétrie 69 parallèle à l'axe optique 67 de l'objectif intégré dans la tête amovible, et produisant une tâche lumineuse circulaire sur un plan objet 71 perpendiculaire à l'axe optique 67 et contenant la cible AB que l'on souhaite mesurer. L'image délivrée par le moniteur vidéo associé à la sonde vidéoendoscopique permet de visualiser l'image vidéo 81 de longueur ab de la cible AB, le centre 80 de l'image vidéo étant l'image vidéo de la projection de l'axe optique 67 sur le plan 71, et le point 82 situé de préférence sur l'axe de symétrie horizontal de l'image vidéo étant l'image vidéo du centre 70 de la tâche lumineuse produite par le faisceau laser sur le plan 71.

Les dispositifs optiques 52, 54, 56 comprennent un ou plusieurs composants optiques (tels que : lentilles traditionnelles, lentilles à gradient d'indice, lentilles asphériques, lentilles anamorphiques, ...) permettant de corriger l'ovalisation du faisceau émis par la diode laser, et de générer un faisceau de lumière produisant des tâches lumineuses présentant un contour de la plus grande netteté possible. En variante, on peut choisir de loger dans l'embout distal de la sonde vidéoendoscopique un collimateur optique fixement associé à la diode laser 3 intégrée dans l'embout distal, et de loger dans la tête de mesure amovible d'autres composants optiques associés au collimateur.

La figure 11 montre un dispositif optique 52 délivrant un faisceau de lumière laser collimaté cylindrique 53 de diamètre D constant générant une tâche circulaire 51 de diamètre D sur un plan objet 71 perpendiculaire à l'axe de symétrie 69 du faisceau et contenant la cible AB dont on souhaite mesurer la longueur. Le moniteur vidéo associé à la sonde vidéoendoscopique délivre dans ces conditions une image 83, de préférence gelée, dans laquelle figurent l'image vidéo 81 de longueur ab de la cible AB et l'image vidéo circulaire 84 de diamètre d de la tâche laser 51 de diamètre D. La méthode de mesure mise en oeuvre consiste à comparer directement la longueur ab de l'image 81 du défaut de dimensions inconnues au diamètre d de l'image 84 de la tâche laser de dimensions connues. La valeur du diamètre d est homothétique de celle du diamètre D qui s'avère naturellement limitée en raison des faibles dimensions frontales de la sonde endoscopique ainsi que cela a été signalé plus avant. De plus, la valeur du diamètre d décroît en fonction de la distance d'observation du défaut AB. Dans un tel contexte, l'image vidéo 84 de la tâche laser se réduit rapidement à un point brillant rendant impossible la mise en oeuvre d'une méthode de mesure directe par comparaison.

La figure 12 montre un dispositif optique 54 délivrant un rayon de lumière laser collimaté 55 générant un point lumineux 58 sur un plan objet 71 perpendiculaire au rayon et contenant la cible AB dont on souhaite mesurer la longueur. Le moniteur vidéo associé à la sonde vidéoendoscopique délivre dans ces conditions une image 85, de préférence gelée, dans laquelle figurent l'image vidéo 81 de longueur ab de la cible AB et un point lumineux 82 situé à une distance e du centre de l'image, ce point correspondant à l'image vidéo du point laser 58 situé à une distance E de l'axe optique 67. La méthode de mesure mise en oeuvre consiste à comparer la longueur ab de l'image 81 du défaut de dimensions inconnues à l'écart e séparant l'image 82 du point laser du centre 80 de l'image vidéo 85.

La figure 13 montre un dispositif optique 56 délivrant un faisceau de lumière laser divergent 57 générant une tâche circulaire 59 de diamètre D sur un plan objet 71 perpendiculaire à l'axe de symétrie 69 du faisceau et contenant la cible AB dont on souhaite mesurer la longueur. Le moniteur vidéo associé à la sonde vidéoendoscopique délivre dans ces conditions une image 86, de préférence gelée, dans laquelle figurent l'image vidéo 81 de longueur ab de la cible AB et l'image vidéo circulaire 87 de la tâche laser 59, image dont le centre 82, situé à une distance e du centre de l'image vidéo est lui-même l'image du centre 70 de la tâche laser situé à une distance E de l'axe optique 67. La première phase de mesure consiste à comparer le diamètre d de l'image 87 de la tâche laser à l'écart e séparant le centre de la tâche du centre 80 de l'image vidéo, ce qui permet d'obtenir le diamètre D de la tâche par la formule suivante :

$$D = d \times \frac{E}{e} \qquad\qquad (3)$$

La seconde phase de la mesure consiste à comparer la longueur ab de l'image 81 du défaut AB au diamètre d précédemment calculé de l'image 87 de la tâche laser en appliquant la formule (1).

Cette méthode présente l'avantage de visualiser sur l'écran une tâche circulaire pouvant servir d'étalon, dont le diamètre reste quasiment constant quelle que soit la distance d'observation du défaut. Cette méthode permet donc d'une part d'effectuer des contrôles de calibration en comparant visuellement la longueur de l'image ab du défaut AB au diamètre d de l'image circulaire 87, et d'autre part, de mesurer des défauts situés dans un plan incliné sur l'axe optique 67 en analysant les caractéristiques de l'image de la tâche laser ovale résultant de la projection du faisceau laser divergent 57 sur le plan incliné.

## Revendications

1. Vidéoendoscope comprenant un embout distal (1) logeant l'extrémité distale d'un faisceau de fibres (25) dont l'extrémité proximale est connectée à un générateur de lumière, ledit faisceau étant configuré pour illuminer une cible (81) dont on souhaite mesurer les dimensions, le vidéoendoscope comprenant en outre un dispositif optique (5) de mise en forme, logé au moins partiellement dans une tête optique amovible (2) adaptable sur l'embout distal (1) et agencé pour produire une tache lumineuse calibrée (84, 82, 87) à proximité de la cible (81) dont on souhaite mesurer les dimensions,
**caractérisé en ce que**
le vidéoendoscope comprend en outre une source laser (3, 91) générant un faisceau laser, à partir duquel le dispositif optique (5) de mise en forme produit ladite tache lumineuse calibrée (84, 82, 87),
et **en ce que** la source laser (3,91) est logée dans l'embout distal (1).

2. Vidéoendoscope selon la revendication 1,
**caractérisé en ce que** la source laser logée dans l'embout distal (1) est constituée par l'extrémité distale (91) d'une fibre optique (90) dont l'extrémité proximale est reliée à une diode laser (93).

3. Vidéoendoscope selon la revendication 1,
**caractérisé en ce que** la source laser logée dans l'embout distal (1) est constituée par une diode laser (3).

4. Vidéoendoscope selon la revendication 3,
**caractérisé en ce que** l'embout distal (1) loge un capteur vidéo (4) d'un dispositif d'imagerie vidéo du vidéoendoscope, la diode laser (3) étant alimentée en mode pulsé asservi à un signal vidéo produit par le dispositif d'imagerie vidéo pour couper l'alimentation de la diode laser (3) en dehors de périodes de balayage ligne du signal vidéo.

5. Vidéoendoscope selon la revendication 3 ou 4,
**caractérisé en ce que** le dispositif optique (5) de mise en forme comprend un collimateur optique couplé à la diode laser (3) dans l'embout distal (1).

6. Vidéoendoscope selon l'une des revendications 1 à 5,
**caractérisé en ce que** le dispositif optique (5) de mise en forme produit un faisceau lumineux (53, 55, 57) parallèle à un axe optique d'observation (67) du vidéoendoscope.

7. Vidéoendoscope selon l'une des revendications 1 à 6,
**caractérisé en ce que** le dispositif optique (5) de mise en forme produit un faisceau lumineux (55) assimilable à un rayon lumineux produisant un point à (82) proximité de la cible (81).

8. Vidéoendoscope selon l'une des revendications 1 à 6,

caractérisé en ce que le dispositif optique (5) de mise en forme produit un faisceau lumineux (53) de section droite circulaire de diamètre constant.

9. Vidéoendoscope selon l'une des revendications 1 à 6,
caractérisé en ce que le dispositif optique de mise en forme (5) produit un faisceau lumineux (57) divergent et de section droite circulaire.

10. Vidéoendoscope selon la revendication 9,
caractérisé en ce qu'il comprend des moyens pour déterminer une taille réelle (D) de la tache lumineuse calibrée (87) en fonction de la taille (d) de la tache observée par le vidéoendoscope, de la distance (E) entre un axe optique d'observation (67) du vidéoendoscope et l'axe (69) du faisceau lumineux (57), et de la distance (e) entre le centre d'une image vidéo (86) produite par le vidéoendoscope et le centre de la tache lumineuse calibrée (87), et des moyens pour déduire les dimensions de la cible observée à partir de la taille réelle (D) de la tache lumineuse (87).

11. Vidéoendoscope selon l'une des revendications 1 à 10,
caractérisé en ce que la tête optique amovible (2) comprend en outre des moyens de réflexion (65), pour introduire une déviation du faisceau laser et de l'axe optique d'observation du vidéoendoscope.

12. Tête optique (2) comprenant un objectif distal de caméra (61, 62, 63) conçu pour coopérer avec un dispositif d'imagerie vidéo logé dans l'embout distal (1) d'une sonde vidéoendoscopique, un faisceau de fibres d'éclairage (39) dont l'extrémité distale est destinée à éclairer une cible (81) et dont l'extrémité proximale est destinée à être couplée à l'extrémité distale d'un faisceau de fibres d'éclairage (25) équipant la sonde vidéoendoscopique, les moyens d'accouplement assurant un alignement correct du faisceau de fibres d'éclairage avec le faisceau de fibres d'éclairage de la sonde vidéoendoscopique,
caractérisée en ce qu'elle comprend des moyens de fixation pour se fixer de manière amovible sur l'embout distal (1) d'une sonde vidéoendoscopique, et un dispositif optique (5) de mise en forme agencé pour recevoir un faisceau laser de la sonde vidéoendoscopique et le mettre en forme pour obtenir une tache lumineuse calibrée (84, 82, 87) à proximité d'une cible (81) dont on souhaite mesurer les dimensions.

13. Tête optique selon la revendication 12,
caractérisée en ce qu'elle comprend en outre des moyens de réflexion (65), pour introduire une déviation de l'angle de visée de l'objectif distal de caméra (61, 62, 63) et du faisceau laser projeté à proximité de la cible (81).

14. Tête optique selon la revendication 13, caractérisée en ce que les moyens de fixation sont du type doigt (45) destiné à coopérer avec une fente en forme de baïonnette (48) prévue sur l'embout distal (1) de la sonde vidéoendoscopique et comprennent des moyens d'accouplement (34, 37) pour assurer un alignement correct, d'une part, de l'axe optique (67) de objectif distal de caméra (61, 62, 63) avec le dispositif d'imagerie vidéo de la sonde vidéoendoscopique, et d'autre part, de l'axe du faisceau laser émis par la sonde vidéoendoscopique avec l'axe optique (69) du dispositif optique (5) de mise en forme.

15. Tête optique selon la revendication 13 ou 14,
caractérisée en ce que les moyens de fixation sont formés sur un tube de verrouillage (10) mobile axialement sur la tête optique entre des positions distale et proximale, et ramené vers la position distale par des moyens de rappel élastiques (44), les moyens d'accouplement (34, 37) étant de type mâle-femelle et étant disposés de manière à arriver en position accouplée en fin de course de verrouillage des moyens de fixation (38, 39), sous l'effet des moyens de rappel élastiques (44).

16. Tête optique selon l'une des revendications 12 à 15,
caractérisée en ce que le dispositif optique de mise en forme (5) produit un faisceau lumineux (53, 55, 57) parallèle à un axe optique d'observation (67) du vidéoendoscope.

17. Tête optique selon l'une des revendications 12 à 16,
caractérisée en ce que le dispositif optique (5) de mise en forme produit un faisceau lumineux assimilable à un rayon lumineux produisant un point à proximité de la cible.

18. Tête optique selon l'une des revendications 12 à 16,
caractérisée en ce que le dispositif optique (5) de mise en forme produit un faisceau lumineux de section droite circulaire de diamètre constant.

**19.** Tête optique selon l'une des revendications 12 à 16,
**caractérisé en ce que** le dispositif optique (5) de mise en forme produit un faisceau lumineux divergent et de section droite circulaire.

**Claims**

**1.** Videoendoscope comprising a distal end-fitting (1) housing the distal end of an array of fibres (25) whose proximal end is connected to a light generator, the said array being configured so as to illuminate a target (81) whose dimensions it is desired to measure, the videoendoscope also comprising an optical beam-conditioning device (5) housed, at least partially, within a detachable optical head (2) adaptable onto the distal end-fitting (1) and designed to produce a calibrated light spot (84, 82, 87) close to the target (81) whose dimensions are to be measured, **characterized in that** the videoendoscope also comprises a laser source (3, 91) generating a laser beam, using which the optical beam-conditioning device (5) produces the said calibrated light spot (84, 82, 87), and **in that** the laser source (3, 91) is housed within the distal end-fitting (1).

**2.** Videoendoscope according to Claim 1, **characterized in that** the laser source housed in the distal end-fitting (1) is formed by the distal end (91) of an optical fibre (90) whose proximal end is connected to a laser diode (93).

**3.** Videoendoscope according to Claim 1, **characterized in that** the laser source housed in the distal end-fitting (1) is formed by a laser diode (3).

**4.** Videoendoscope according to Claim 3, **characterized in that** the distal end-fitting (1) houses a video sensor (4) of a video imaging device of the videoendoscope, the laser diode (3) being powered in pulsed mode feedback-controlled onto a video signal produced by the video imaging device so as to interrupt the power supply to the laser diode (3) outside of line-scan periods of the video signal.

**5.** Videoendoscope according to either of Claims 3 and 4, **characterized in that** the optical beam-conditioning device (5) comprises an optical collimator coupled to the laser diode (3) in the distal end-fitting (1).

**6.** Videoendoscope according to one of Claims 1 to 5, **characterized in that** the optical beam-conditioning device (5) produces a light beam (53, 55, 57) parallel to an observation optical axis (67) of the videoendoscope.

**7.** Videoendoscope according to one of Claims 1 to 6, **characterized in that** the optical beam-conditioning device (5) produces a light beam (55) corresponding to a light ray producing a dot (82) close to the target (81).

**8.** Videoendoscope according to one of Claims 1 to 6, **characterized in that** the optical beam-conditioning device (5) produces a light beam (53) of circular perpendicular cross section with constant diameter.

**9.** Videoendoscope according to one of Claims 1 to 6, **characterized in that** the optical beam-conditioning device (5) produces a divergent light beam (57) of circular perpendicular cross section.

**10.** Videoendoscope according to Claim 9, **characterized in that** it comprises means for determining a real size (D) of the calibrated light spot (87) as a function of the size (d) of the spot observed by the videoendoscope, of the distance (E) between an observation optical axis (67) of the videoendoscope and the axis (69) of the light beam (57), and of the distance (e) between the centre of a video image (86) produced by the videoendoscope and the centre of the calibrated light spot (87), and means for deducing the dimensions of the observed target starting from the real size (D) of the light spot (87).

**11.** Videoendoscope according to one of Claims 1 to 10, **characterized in that** the detachable optical head (2) also comprises reflection means (65) for introducing a deviation into the laser beam and into the observation optical axis of the videoendoscope.

**12.** Optical head (2) comprising a camera distal lens (61, 62, 63) designed to cooperate with a video imaging device housed within the distal end-fitting (1) of a videoendoscopic probe, an array of illuminating fibres (39) whose distal end is designed to illuminate a target (81) and whose proximal end is designed to be coupled to the distal end of an array of illuminating fibres (25) equipping the videoendoscopic probe, the coupling means ensuring the correct alignment of the array of illuminating fibres with the array of illuminating fibres of the videoendoscopic probe, **char-**

**acterized in that** it comprises fixing means for being fixed in a detachable manner onto the distal end-fitting (1) of a videoendoscopic probe, and an optical beam-conditioning device (5) configured for receiving a laser beam from the videoendoscopic probe and for conditioning it so as to obtain a calibrated light spot (84, 82, 87) close to a target (81) whose dimensions are to be measured.

13. Optical head according to Claim 12, **characterized in that** it also comprises reflection means (65) for introducing a deviation into the aiming angle of the camera distal lens (61, 62, 63) and of the laser beam projected close to the target (81).

14. Optical head according to Claim 13, **characterized in that** the fixing means are of the finger type (45) designed to cooperate with a bayonet-shaped slot (48) provided on the distal end-fitting (1) of the videoendoscopic probe and comprise coupling means (34, 37) in order to ensure correct alignment, on the one hand, of the optical axis (67) of the camera distal lens (61, 62, 63) with the video imaging device of the videoendoscopic probe and, on the other, of the axis of the laser beam emitted by the videoendoscopic probe with the optical axis (69) of the beam-conditioning optical device (5).

15. Optical head according to either of Claims 13 and 14, **characterized in that** the fixing means are formed on a locking tube (10) that is axially mobile on the optical head between distal and proximal positions, and returned back to the distal position by elastic return means (44), the coupling means (34, 37) being of the male-female type and being disposed in such a manner as to arrive at the coupled position at the end of the locking travel of the fixing means (38, 39) under the effect of the elastic return means (44).

16. Optical head according to one of Claims 12 to 15, **characterized in that** the optical beam-conditioning device (5) produces a light beam (53, 55, 57) parallel to an observation optical axis (67) of the videoendoscope.

17. Optical head according to one of Claims 12 to 16, **characterized in that** the optical beam-conditioning device (5) produces a light beam corresponding to a light ray producing a dot close to the target.

18. Optical head according to one of Claims 12 to 16, **characterized in that** the optical beam-conditioning device (5) produces a light beam of circular perpendicular cross section with constant diameter.

19. Optical head according to one of Claims 12 to 16, **characterized in that** the optical beam-conditioning device (5) produces a divergent light beam of circular perpendicular cross section.

**Patentansprüche**

1. Videoendoskop mit einem distalen Ansatzstück (1), welches das distale Ende eines Faserbündels (25) aufnimmt, dessen proximales Ende an einem Lichtgenerator angeschlossen ist, wobei das Bündel so ausgebildet ist, dass dieses eine Treffplatte (81) beleuchtet, von welcher die Dimensionen gemessen werden sollen, wobei das Videoendoskop ferner eine optische Formungseinrichtung (5) umfasst, die wenigstens teilweise in einem abnehmbaren optischen Kopf (2) aufgenommen ist, der auf das distale Ansatzstück (1) ansetzbar und so angeordnet ist, dass dieser einen kalibrierten Lichtfleck (84, 82, 87) in der Nähe der Treffplatte (81) erzeugt, von der die Dimensionen gemessen werden sollen,
   **dadurch gekennzeichnet, dass**
   das Videoendoskop ferner eine Laserquelle (3, 91) umfasst, die ein Laserbündel erzeugt, aus welchem die optische Formungseinrichtung (5) den kalibrierten Lichtfleck (84, 82, 87) erzeugt,
   und dass die Laserquelle (3, 91) in dem distalen Ansatzstück (1) sitzt.

2. Videoendoskop nach Anspruch 1,
   **dadurch gekennzeichnet, dass** die in dem distalen Ansatzstück (1) sitzende Laserquelle durch ein distales Ende (91) einer optischen Faser (90) gebildet wird, deren proximales Ende mit einer Laserdiode (93) verbunden ist.

3. Videoendoskop nach Anspruch 1,
   **dadurch gekennzeichnet, dass** die in dem distalen Ansatzstück (1) sitzende Laserquelle durch eine Laserdiode (3) gebildet wird.

4. Videoendoskop nach Anspruch 3,

**dadurch gekennzeichnet, dass** das distale Ansatzstück (1) einen Bildgeber (4) einer Video-Abbildungseinrichtung des Videoendoskops aufnimmt, wobei die Laserdiode (3) in einem pulsierten Modus, gebunden an ein Videosignal, das durch die Video-Abbildungseinrichtung erzeugt wird, versorgt wird, um die Versorgung der Laserdiode (3) außerhalb von Zeitspannen der Zeilenabtastung des Videosignals zu unterbrechen.

5. Videoendoskop nach Anspruch 3 oder 4,
   **dadurch gekennzeichnet, dass** die optische Formungseinrichtung (5) einen optischen Kollimator umfasst, der an die Laserdiode (3) in dem distalen Ansatzstück (1) gekoppelt ist.

6. Videoendoskop nach einem der Ansprüche 1 bis 5,
   **dadurch gekennzeichnet, dass** die optische Formungseinrichtung (5) ein Lichtbündel (53, 55, 57) parallel zu einer optischen Beobachtungsachse (67) des Videoendoskops erzeugt.

7. Videoendoskop nach einem der Ansprüche 1 bis 6,
   **dadurch gekennzeichnet, dass** die optische Formungseinrichtung (5) ein Lichtbündel (55) erzeugt, das an einen Lichtstrahl anpassbar ist, der einen Punkt (82) in der Nähe der Treffplatte (81) erzeugt.

8. Videoendoskop nach einem der Ansprüche 1 bis 6,
   **dadurch gekennzeichnet, dass** die optische Formungseinrichtung (5) ein Lichtbündel (53) mit geradem kreisförmigem Querschnitt konstanten Durchmessers erzeugt.

9. Videoendoskop nach einem der Ansprüche 1 bis 6,
   **dadurch gekennzeichnet, dass** die optische Formungseinrichtung (5) ein Lichtbündel (57) erzeugt, dass divergiert und einen geraden kreisförmigen Querschnitt hat.

10. Videoendoskop nach Anspruch 9,
    **dadurch gekennzeichnet, dass** dieses eine Einrichtung umfasst, um zum Bestimmen einer tatsächlichen Größe (B) des kalibrierten Lichtflecks (87) in Abhängigkeit von der Größe (d) des durch das Videoendoskop beobachteten Flecks, den Abstand (E) zwischen einer optischen Beobachtungsachse (67) des Videoendoskops und der Achse (69) des Lichtbündels (57) und den Abstand (e) zwischen dem Zentrum eines durch das Videoendoskop erzeugten Videobildes (86) und dem Zentrum des kalibrierten Lichtflecks (87), und einer Einrichtung, um die Abmessungen der beobachteten Treffplatte ausgehend von der wirklichen Größe (D) des Lichtflecks (87) abzuleiten.

11. Videoendoskop nach einem der Ansprüche 1 bis 10,
    **dadurch gekennzeichnet, dass** der abnehmbare optische Kopf (2) ferner eine Reflektionseinrichtung (65) umfasst, um eine Ablenkung des Laserbündels und der optischen Beobachtungsachse des Videoendoskops herbeizuführen.

12. Optischer Kopf (2) mit einem distalen Kameraobjektiv (61, 62, 63), das dafür vorgesehen ist, mit einer Video-Abbildungseinrichtung, die in dem distalen Ansatzstück (1) einer Videoendoskopsonde sitzt, zusammenzuwirken, einem Leuchtfaserbündel (39), dessen distales Ende dazu bestimmt ist, eine Treffplatte (81) zu beleuchten, und dessen proximales Ende dazu bestimmt ist, an ein distales Ende eines Leuchtfaserbündels (25) angekoppelt zu werden, mit dem die Videoendoskopsonde ausgestattet ist, wobei die Kupplungseinrichtung eine korrekte Ausrichtung des Leuchtfaserbündels mit dem Leuchtfaserbündel der Videoendoskopsonde sicherstellt, **dadurch gekennzeichnet, dass** dieser eine Befestigungseinrichtung umfasst, um sich lösbar auf dem distalen Ansatzstück (1) einer Videoendoskopsonde festzulegen, und eine optische Formungseinrichtung (5), die so angeordnet ist, dass diese ein Laserbündel der Videoendoskopsonde empfängt und diese in eine solche Form bringt, dass ein kalibrierter Lichtfleck (84, 82, 87) in der Nähe einer Treffplatte (81) erhalten wird, von der die Dimensionen gemessen werden sollen.

13. Optischer Kopf nach Anspruch 12,
    **dadurch gekennzeichnet, dass** dieser ferner eine Reflektionseinrichtung (65) umfasst, um eine Ablenkung des Sichtwinkels des distalen Kameraobjektivs (61, 62, 63) und des an die Nähe der Treffplatte (1) projizierten Laserbündels herbeizuführen.

14. Optischer Kopf nach Anspruch 13,
    **dadurch gekennzeichnet, dass** die Befestigungseinrichtung in Form eines Zapfens (45) vorliegt, der dazu bestimmt ist, mit einem Schlitz in Form eines Bajonetts (48) zusammenzuwirken, der auf dem distalen Ansatzstück (1) der Videoendoskopsonde vorgesehen ist, und eine Kupplungseinrichtung (34, 37) umfasst, um einerseits eine korrekte Ausrichtung der optischen Achse (67) des distalen Kameraobjektivs (61, 62, 63) mit der Video-Abbildungseinrichtung der Videoendoskopsonde und andererseits der Achse des durch die Videoendoskopsonde gesendeten Laserbündels mit der optischen Achse (69) der optischen Formungseinrichtung (5) sicherzustellen.

15. Optischer Kopf nach Anspruch 13 oder 14,
**dadurch gekennzeichnet, dass** die Befestigungseinrichtung auf einem Riegelungsrohr (10) ausgebildet ist, das auf dem optischen Kopf zwischen einer distalen und einer proximalen Position axial beweglich ist und in Richtung der distalen Position durch elastische Rückholmittel (44) zurückgehalten wird, wobei die Kupplungseinrichtung (34, 37) in der Bauweise männlich/weiblich vorliegt und so angeordnet ist, dass diese am Ende des Verriegelungsvorgangs der Befestigungseinrichtung (38, 39) unter der Wirkung der elastischen Rückholmittel (44) in eine angekuppelte Position gelangt.

16. Optischer Kopf nach einem der Ansprüche 12 bis 15,
**dadurch gekennzeichnet, dass** die optische Formungseinrichtung (5) ein Lichtbündel (53, 55, 57) parallel zu einer optischen Beobachtungsachse (67) des Videoendoskops erzeugt.

17. Optischer Kopf nach einem der Ansprüche 12 bis 16,
**dadurch gekennzeichnet, dass** die optische Formungseinrichtung (5) ein Lichtbündel erzeugt, das an einen Lichtstrahl angepasst werden kann, der einen Punkt in der Nähe der Treffplatte erzeugt.

18. Optischer Kopf nach einem der Ansprüche 12 bis 16,
**dadurch gekennzeichnet, dass** die optische Formungseinrichtung (5) ein Lichtbündel mit geradem kreisförmigem Querschnitt von konstantem Durchmesser erzeugt.

19. Optischer Kopf nach einem der Ansprüche 12 bis 16,
**dadurch gekennzeichnet, dass** die optische Formungseinrichtung (5) ein Lichtbündel erzeugt, das divergiert und einen geraden kreisförmigen Querschnitt hat.

Fig. 1

Fig. 2

Fig. 3

Fig. 4

Fig. 5

Fig. 6

Fig. 7

Fig. 8

# Fig. 9

Fig. 10

Fig. 11

**Méthode Directe** 83

Fig. 12

**Méthode Indirecte** 85

Fig. 13

**Méthode Mixte** 86

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4727859 A
- JP 11045349 B
- GB 1573142 A
- GB 2269453 A
- US 4281931 A
- DE 3629435
- FR 2630538
- FR 2480107
- DE 2847561
- US 4660982 A

- US 4980763 A
- US 5663675 A
- US 4873572 A
- US 20020137986 A
- US 6063023 A
- US 5222477 A
- DE 3432583
- DE 4102614
- US 6411327 B